# EUROPÄISCHE PATENTSCHRIFT

(11) **EP 2 655 282 B1**
(45) Veröffentlichungstag und Bekanntmachung des Hinweises auf die Patenterteilung: **11.10.2017**
(21) Anmeldenummer: 11802925.5
(22) Anmeldetag: 20.12.2011
(51) Int. Cl.: C04B 24/26, C08F 218/08, C08F 222/06, C08F 220/28

(54) **POLYMER AUS MALEINSÄURE, ALLYLETHER UND VINYLACETAT, DESSEN HERSTELLUNG UND VERWENDUNG**
POLYMER MADE FROM MALEIC ACID, ALLYL ETHER, AND VINYL ACETATE, PRODUCTION OF SAID POLYMER, AND USE OF SAID POLYMER
POLYMÈRE À BASE D'ACIDE MALÉIQUE, D'ÉTHER ALLYLIQUE ET D'ACÉTATE DE VINYLE, SA PRODUCTION ET SON UTILISATION

(30) Priorität: 24.12.2010 EP 10196978
(43) Veröffentlichungstag der Anmeldung: 30.10.2013
(73) Patentinhaber: Sika Technology AG, 6340 Baar (CH)
(72) Erfinder: SULSER, Ueli, CH-8103 Unterengstringen (CH); FRUNZ, Lukas, CH-8057 Zürich (CH); ZIMMERMANN, Jörg, CH-8400 Winterthur (CH)
(74) Vertreter: Sika Patent Attorneys
(86) Internationale Anmeldenummer: PCT/EP2011/073418
(87) Internationale Veröffentlichungsnummer: WO 2012/084954

(56) Entgegenhaltungen:
- EP-A2- 0 798 320
- JP-A- 2004 137 130

## Beschreibung

### Technisches Gebiet

Die vorliegende Erfindung betrifft Zusatzmittel für hydraulisch abbindende Systeme, insbesondere Dispergiermittel für Betonzusammensetzungen.

### Stand der Technik

Polymere aus Maleinsäure oder deren Derivaten und Allylethern werden bereits seit längerem in der Betontechnologie als Verflüssiger wegen ihrer Wasserreduktion eingesetzt. Bei Zusatz solcher Polymere zu hydraulisch abbindenden Zusammensetzungen wie Zementen kann der Wasseranteil erniedrigt werden, was für die Stabilität des Betons von Vorteil ist. Diese Polymere haben eine Kammpolymerstruktur. Im Stand der Technik werden zur Herstellung von gattungsgemässen Kammpolymeren im Wesentlichen Temperaturen von über 60°C verwendet, beispielsweise in US 6,388,038 B1.

Ein besonderes Problem bei bekannten Verflüssigern auf der Basis von Kammpolymeren besteht darin, dass die Langzeitverarbeitbarkeit mit der Zeit schnell abnimmt, so dass die hydraulisch abbindenden Zusammensetzungen nach kurzer Zeit nur noch schlecht verarbeitbar sind.

### Darstellung der Erfindung

Aufgabe der vorliegenden Erfindung ist es daher, Polymere aus Maleinsäure oder deren Derivaten und Allylethern zur Verfügung zu stellen, welche die oben beschriebenen Nachteile nicht aufweisen. Es sollen neue Verflüssiger auf Basis von Maleinsäure oder deren Derivaten und Allylethern zur Verwendung in hydraulisch abbindenden Zusammensetzungen bereitgestellt werden, die besondere und vorteilhafte Eigenschaften aufweisen. Die Polymere sollen in hydraulisch abbindenden Zusammensetzungen eine verbesserte verflüssigende Wirkung zeigen. Der Erfindung liegt insbesondere das Problem zugrunde, Polymere bereitzustellen, die hydraulisch abbindenden Zusammensetzungen eine gute Langzeitverarbeitbarkeit ermöglichen.

Überraschenderweise wurde nun gefunden, dass Polymere gemäss Anspruch 1 sowie Polymere hergestellt nach einem Verfahren gemäss Anspruch 6 diese Aufgabe lösen. Solche Polymere führen in hydraulisch abbindenden Zusammensetzungen sowohl zu einer Verbesserung der Langzeitverarbeitbarkeit als auch zu einer Verbesserung der Wasserreduktion.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Polymer P umfassend:
a. *m* Mol-% mindestens einer Struktureinheit A der Formel (I); 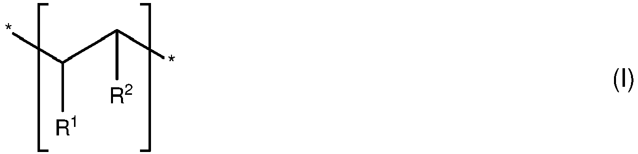
b. *n* Mol-% mindestens einer Struktureinheit B der Formel (II); 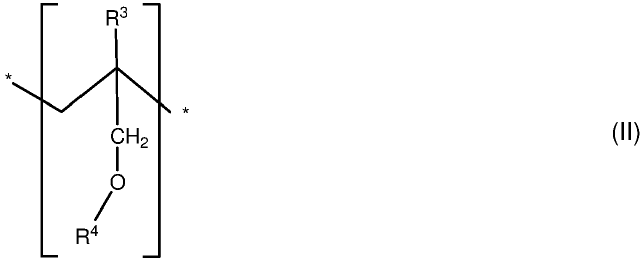
c. *o* Mol-% mindestens einer Struktureinheit **C** der Formel (III); 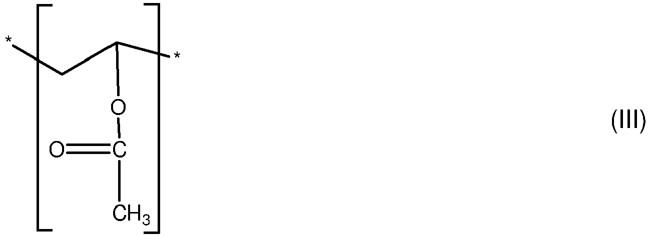 und gegebenenfalls
d. *p* Mol-% mindestens einer weiteren Struktureinheit **D**;
   wobei R¹ und R² hierbei unabhängig voneinander je für COO⁻M oder COOR⁴ steht,
   R³ für H oder CH₃ steht,
   R⁴ für 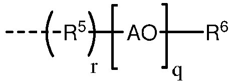 steht,
   R⁵ für eine Alkylengruppe mit 1 bis 6 C-Atomen steht,
   R⁶ für H, eine Alkylgruppe, vorzugsweise mit 1 bis 20 C-Atomen, eine Alkylarylgruppe, vorzugsweise mit 7 bis 20 C-Atomen, steht;
   wobei der Substituent A unabhängig voneinander für eine C2- bis C4-Alkylengruppe steht, der Index q einen Wert von 2 bis 300, insbesondere von 2 bis 50, darstellt und der Index r einen Wert von 0 bis 1 darstellt;
   wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
   wobei *m, n, o, p* unabhängig voneinander Zahlen bedeuten, wobei die Summe *m+n+o+p =* 100, und *m*>0*, n*>0*, o*>0 und *p*≥0 bedeuten; und
   wobei
   *m* = 20 - 85, vorzugsweise 30 - 60, insbesondere bevorzugt 45 - 55,
   *n* = 10 - 50, vorzugsweise 20 - 35, insbesondere bevorzugt 25 - 30,
   *o* = 5 - 50, vorzugsweise 10 - 30, insbesondere bevorzugt 12.5 - 25,
   *p* = 0 - 20, vorzugsweise 0 - 10, beträgt.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.

Unter dem Begriff "Kammpolymer" wird im vorliegenden Dokument ein Kammpolymer bestehend aus einer linearen Polymerkette (=Hauptkette), an welcher über Ester- oder Ethergruppen Seitenketten angebunden sind, verstanden. Die Seitenketten bilden hierbei bildlich gesprochen die "Zähne" eines "Kamms".

Dem Fachmann ist klar, dass es sich bei COO⁻M einerseits um ein Carboxylat handelt, an welches das Ion M gebunden ist, und dass andererseits bei mehrwertigen Ionen M die Ladung durch Gegenionen ausgeglichen sein muss.

Die fett markierten Bezeichnungen wie **P**, **A**, **A'**, **B**, **B'**, **C**, **C'**, **D**, **D'** und dergleichen im vorliegenden Dokument dienen lediglich für das bessere Leseverständnis und Identifizierung.

Bei der Struktureinheit **D** handelt es sich typischerweise um Einheiten, die durch Polymerisation entstehen von ethylenisch ungesättigten Carbonsäuren oder deren Derivaten, insbesondere deren Salze, Anhydride, Ester oder Amide.

Beispiele für geeignete Struktureinheiten **D** sind Einheiten, die durch Polymerisation entstehen von Mesaconsäure, Citraconsäure, Glutactonsäure, Fumarsäure, Maleaminsäure, Itaconsäure, Vinylbenzoesäure, Crotonsäure, oder Anhydride der vorgehend genannten Säuren oder Derivate davon, insbesondere deren Salze, Anhydride, Ester oder Amide. Bevorzugt sind Monocarbonsäuren, oder Derivate davon, insbesondere deren Salze, Anhydride, Ester oder Amide.

Es kann weiter vorteilhaft sein, wenn das Polymer **P** weniger als 5 Mol-% Struktureinheit **D**, insbesondere keine Struktureinheit **D**, aufweist.

Das Polymer **P** weist vorzugsweise ein mittleres Molekulargewicht Mₙ von 500-200'000 g/mol, vorzugsweise 5'000-70'000 g/mol, insbesondere bevorzugt 15'000-50'000 g/mol auf.

Es ist weiter vorteilhaft, wenn das Polymer **P** ein Verhältnis *m*/*(n+o+p)* von 0.5 - 2.5, insbesondere 0.8 - 1.2 aufweist.

Vorzugsweise beträgt in dem Polymer **P** das Verhältnis *m*/*o* von 2.5 - 4. Ein Verhältnis *m*/*o* von 2.5 - 4 ist dahingehend von Vorteil, dass besonders gute Resultate für die Erhöhung der Langzeitverarbeitbarkeit von hydraulisch abbindenden Zusammensetzungen erzielt werden.

Ein Verhältnis *m*/*o* von 1.5 - 3 ist dahingehend von Vorteil, dass besonders gute Resultate für die Erhöhung des Ausbreitmasses sofort nach Zugabe in hydraulisch abbindenden Zusammensetzungen erzielt werden.

In einer bevorzugten Ausführungsform umfasst das Polymer **P**:
30 - 60 Mol-%, vorzugsweise 45 - 55 Mol-% der Struktureinheit **A** der Formel (I);
20 - 35 Mol-%, vorzugsweise 25 - 30 Mol-% der Struktureinheit **B** der Formel (II);
10 - 30 Mol-%, vorzugsweise 12.5 - 25 Mol-% der Struktureinheit **C**;
jeweils bezogen auf die Gesamtmolmenge der Struktureinheiten von **A, B** und **C** im Polymer **P**.

In einer besonders bevorzugten Ausführungsform besteht das Polymer **P** zu mehr als 95 Gew.-%, vorzugsweise zu mehr als 98 Gew.-%, aus vorgehend genannten Struktureinheiten von **A**, **B** und **C** mit den vorgehend als bevorzugt genannten Verhältnissen der Mol-%. Das Polymer **P** kann also neben den Struktureinheiten von **A**, **B** und **C** noch weitere Struktureinheiten aufweisen, die beispielsweise von Molekulargewichtsreglern herrühren.

In einer weiteren bevorzugten Ausführungsform steht bei dem Polymer **P**
R¹ und R² je für COO⁻M;
R³ für H;
R⁴ für 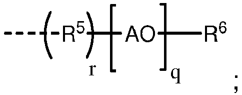 R⁵ für eine Alkylengruppe mit 1 bis 6 C-Atomen;
R⁶ für H, eine Alkylgruppe, vorzugsweise mit 1 bis 20 C-Atomen, insbesondere steht R⁶ für CH₃;
der Substituent A unabhängig voneinander für eine C2- bis C4-Alkylengruppe steht, der Index q einen Wert von 2 bis 300, insbesondere von 2 bis 50;
der Index r für einen Wert von 0 bis 1, insbesondere 0;
M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium;
*m* = 30 - 60, vorzugsweise 45 - 65;
*n* = 20 - 35, vorzugsweise 25 - 30;
*o* = 10 - 30, vorzugsweise 12.5 - 25;
*p* = 0 - 10, vorzugsweise 0.

In einem weiteren Aspekt betrifft die vorliegende Erfindung ein Verfahren zur Herstellung eines Polymers **P**, wie es vorgehend beschrieben wurde.

In einer bevorzugten Ausführungsform handelt es sich bei dem Verfahren zur Herstellung eines Polymers **P** um ein Verfahren zur Herstellung eines Polymers **P** umfassend den Schritt der radikalische Polymerisation von:
i) *m'* Mol-% mindestens einer Verbindung **A'**, welche ein Maleinsäureanhydrid ist oder eine Verbindung der Formel (IV); 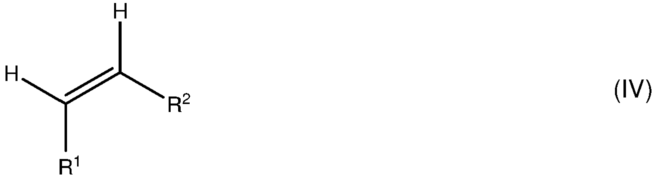
ii) *n'* Mol-% mindestens einer Verbindung B' der Formel (V); 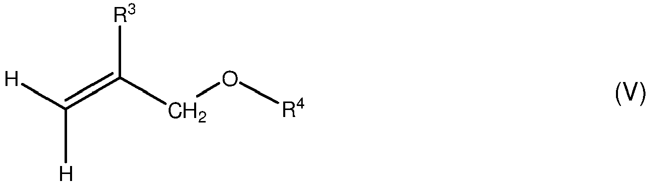
iii) *o'* Mol-% mindestens einer Verbindung C' der Formel (VI); 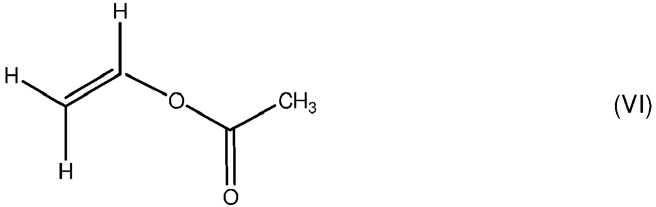 und gegebenenfalls
iv) *p'* Mol-% mindestens einer weiteren Verbindung **D'**;
   wobei R¹ und R² hierbei unabhängig voneinander je für COO⁻M oder COOR⁴ steht
   wobei R³ für H oder CH₃
   wobei R⁴ für 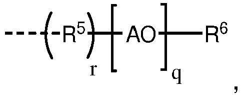 R⁵ für eine Alkylengruppe mit 1 bis 6 C-Atomen,
   R⁶ für H, eine Alkylgruppe, vorzugsweise mit 1 bis 20 C-Atomen, eine Alkylarylgruppe, vorzugsweise mit 7 bis 20 C-Atomen, steht;
   wobei der Substituent A unabhängig voneinander für eine C2- bis C4-Alkylengruppe steht, der Index q einen Wert von 2 bis 300, insbesondere von 2 bis 50, darstellt und der Index r einen Wert von 0 bis 1 darstellt;
   wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet; wobei *m', n', o', p'* unabhängig voneinander Zahlen bedeuten, wobei die Summe *m'+n'+o'+p'* = 100, und *m'*>0, *n'*>0, *o'*>0 und *p'*≥0 bedeuten; und
   wobei
   *m'***=** 20 - 85, vorzugsweise 30 - 60, insbesondere bevorzugt 45 - 55,
   *n'*= 10 - 50, vorzugsweise 20 - 35, insbesondere bevorzugt 25 - 30,
   *o'*= 5 - 50, vorzugsweise 10 - 30, insbesondere bevorzugt 12.5 - 25,
   *p'*= 0 - 20, vorzugsweise 0 - 10, beträgt,
in Gegenwart von einem Initiator für radikalische Polymerisationen bei einer Reaktionstemperatur von 10°C bis 50 °C, bevorzugt von 15 °C bis 35 °C.

Unter dem Begriff "Initiator für radikalische Polymerisationen" oder "Radikalinitiator" wird im vorliegenden Dokument eine Verbindung verstanden, wie sie beschrieben ist als Initiator in CD Römpp Chemie Lexikon, 9. Auflage, Version 1.0, Georg Thieme Verlag, Stuttgart 1995, welche sich für radikalische Polymerisationen eignen.

Weiter kann es vorteilhaft sein, wenn das Verfahren weiter iv) *p'* Mol-% mindestens einer weiteren Verbindung **D'** aufweist.

Vorzugsweise handelt es sich bei den Verbindungen **D'** um Verbindungen, die durch Polymerisation zu Struktureinheiten führen, wie sie als bevorzugte Struktureinheiten **D** vorgehend erwähnt wurden.

Es kann jedoch auch vorteilhaft sein, wenn weniger als 5 Mol-% einer weiteren Verbindung **D'**, insbesondere keine Verbindung **D'**, verwendet werden.

Vorzugsweise beträgt das Verhältnis *m'*/*(n'+o'+p')* zwischen 0.5 und 2.5.

In einer bevorzugten Ausführungsform werden folgende Mengen der Verbindungen **A'**, **B'** und **C'** eingesetzt:
30 - 60 Mol-%, vorzugsweise 45 - 55 Mol-% der Verbindung **A'** der Formel (IV);
20 - 35 Mol-%, vorzugsweise 25 - 30 Mol-% der Verbindung **B'** der Formel (V);
10 - 30 Mol-%, vorzugsweise 12.5 - 25 Mol-% der Verbindung **C'** der Formel (VI);
jeweils bezogen auf die bei der Herstellung eingesetzte Gesamtmolmenge der Verbindungen **A'**, **B'** und **C'**.

In einer weiteren bevorzugten Ausführungsform steht bei dem Verfahren:
R¹ und R² je für COO⁻M;
R³ für H;
R⁴ für 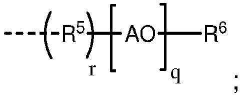
R⁵ für eine Alkylengruppe mit 1 bis 6 C-Atomen;
R⁶ für H, eine Alkylgruppe, vorzugsweise mit 1 bis 20 C-Atomen, insbesondere steht R⁶ für CH₃;
der Substituent A unabhängig voneinander für eine C2- bis C4-Alkylengruppe steht, der Index q einen Wert von 2 bis 300, insbesondere von 2 bis 50;
der Index r für einen Wert von 0 bis 1, insbesondere 0;
M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium;
*m'* = 30 - 60, vorzugsweise 45 - 65;
*n'* = 20 - 35, vorzugsweise 25 - 30;
*o'* = 10 - 30, vorzugsweise 12.5 - 25;
*p'* = 0 - 10, vorzugsweise 0.

Vorzugsweise weist das Polymers **P** hergestellt nach dem erfindungsgemässen Verfahren ein mittleres Molekulargewicht Mₙ auf, wie es als bevorzugt vorgehend beschrieben wurde.

Das Verfahren findet in Gegenwart von einem Initiator für radikalische Polymerisationen bei einer Reaktionstemperatur von 10°C bis 50°C, bevorzugt von 15°C bis 35°C, statt. Eine solche Reaktionstemperatur ist dahingehend von Vorteil, dass dabei keine oxidativen Schädigung der entstehenden Polymere auftritt, was sich negativ auf die Verbesserung der Langzeitverarbeitbarkeit von hydraulisch abbindenden Zusammensetzungen auswirkt, welche mit Hilfe der Polymere erreicht werden kann. Weiter ist eine solche Reaktionstemperatur für die Verwendung von Vinylacetat zuträglich, weil dadurch die Durchführung der Reaktion trotz des tiefen Siedepunktes von Vinylacetat typischerweise nicht unter Druck durchgeführt werden muss. Weiter führt eine solch tiefe Reaktionstemperatur in einem wässrigen Lösungsmittel dazu, dass das schlecht wasserlösliche Vinylacetat, welches bei Temperaturen über 50°C zu einem grossen Teil homopolymerisieren würde, überraschenderweise zu einem hohen Teil mit Verbindung **A'**, respektive Verbindung **B'**, respektive Verbindung **D'** reagiert.

Vorzugsweise handelt es sich bei dem Initiator für radikalische Polymerisationen um einen Redoxsystem-basierten Initiator oder einen UVbasierten Initiator. Dies ist dahingehend von Vorteil, dass solche Systeme bei Temperaturen von 10 °C bis 50 °C, bevorzugt von 15 °C bis 35 °C, effizient zur Bildung von Radikalen beitragen.

Vorzugsweise handelt es sich bei dem Initiator für radikalische Polymerisationen um einen Redoxsystem-basierten Initiator. Insbesondere bevorzugt umfasst der Redoxsystem-basierten Initiator ein reduzierendes Mittel und einem Radikalbildner, wobei das reduzierende Mittel ausgewählt ist aus der Gruppe bestehend aus Natriumhydroxymethansulfinat (Rongalit), Alkalimetallsulfite, Metabisulfite, Ascorbinsäure und Keto-enole und der Radikalbildner ist vorzugsweise eine Peroxidverbindung, beispielsweise Wasserstoffperoxid oder Natriumperoxid.

Vorzugsweise wird der Initiator im Verhältnis von 0.05 bis 20 Gew.-%, bevorzugt 0.01 bis 10 Gew.-%, insbesondere bevorzugt im Verhältnis von 0.1 bis 2 Gew.-%, bezogen auf das Gesamtgewicht der Summe der Verbindungen **A'**, **B'**, **C'** und gegebenenfalls **D'**, eingesetzt.

Findet die Reaktion in einem wässrigen Lösungsmittel, insbesondere in Wasser, statt werden bevorzugt Initiatoren verwendet, die in Wasser gut löslich sind.

Der Initiator kann auf verschiedene Art im Verlauf der radikalischen Polymerisation der Reaktion zugegeben werden. Er kann sowohl vollständig in das Reaktionsgefäss als auch nach Massgabe seines Verbrauchs im Verlauf der Polymerisation kontinuierlich oder stufenweise zugefügt werden. Vorzugsweise wird der Initiator dem Polymerisationsgemisch während dem Verlauf der radikalischen Polymerisation kontinuierlich zugeführt.

Vorzugsweise wird die radikalische Polymerisation bei einem pH von 2 - 4 durchgeführt. Dies ist dahingehend von Vorteil, weil dadurch eine Hydrolysespaltung der Verbindung **B'** weitgehend verhindert wird.

Weiter ist es vorteilhaft, wenn die radikalische Polymerisation in Emulsion, in Masse oder in Lösung, bevorzugt in Lösung, insbesondere bevorzugt in wässriger Lösung, am meisten bevorzugt in Wasser, ausgeführt wird. Wässrige Lösungen sind für eine spätere Verwendung zur Verlängerung der Verarbeitbarkeit von hydraulisch abbindende Zusammensetzungen von Vorteil, falls sie als flüssiges Produkt eingesetzt werden sollen.

Weiter kann es vorteilhaft sein, die Polymerisationsreaktion so durchzuführen, dass die Verbindung **C'** kontinuierlich über die Dauer der Polymerisationsreaktion der Reaktion zugeführt wird.

Die aufgrund des vorgehend beschriebenen, auf radikalischer Polymerisation bei einer Reaktionstemperatur von 10°C bis 50°C basierendem, Herstellungsverfahren hergestellten Polymer **P** weisen den Vorteil auf, dass aufgrund eines gleichmässigen Einbaus der Verbindung **A'**, Verbindung **B'**, Verbindung **C'** und gegebenenfalls Verbindung **D'**, Kammpolymere mit sehr unterschiedlichen und vorteilhaften Strukturen und Eigenschaften erhalten werden können gegenüber Kammpolymeren, welche mit Herstellungsverfahren basierend auf radikalischer Polymerisation bei einer Reaktionstemperatur von über 60°C hergestellt wurden. Überraschenderweise wurde festgestellt, dass bei dem Einsatz von Polymeren **P**, die durch das erfindungsgemäße Verfahren hergestellt wurden, besonders vorteilhafte Eigenschaften erzielt werden, wobei insbesondere die Verarbeitbarkeit von hydraulisch abbindenden Zusammensetzungen wie Zementzusammensetzungen sofort nach Zugabe und/oder über längere Zeiträume verbessert wird. Die unterschiedlichen Eigenschaften werden wahrscheinlich durch unterschiedliche Verteilungen der Seitenketten im Polymer **P** erhalten.

Unter dem Begriff "hydraulisch abbindende Bindemittel" werden im vorliegenden Dokument Verbindungen verstanden, wie sie beschrieben sind in CD Römpp Chemie Lexikon, 9. Auflage, Version 1.0, Georg Thieme Verlag, Stuttgart 1995, welche in Gegenwart von Wasser erhärten, auch unter Sauerstoffausschluss, wie beispielsweise unter Wasser.

Unter dem Begriff "hydraulisch abbindende Zusammensetzung" werden Zusammensetzungen verstanden, die hydraulisch abbindende Bindemittel enthalten. Geeignete Zusammensetzungen und Bindemittel sind dem Fachmann im Bereich der Bauchemie bekannt. In einer bevorzugten Ausführungsform der Erfindung ist das hydraulisch abbindende Bindemittel ausgewählt aus der Gruppe bestehend aus Zement und gebranntem Kalk.

Übliche Zemente sind beispielsweise Portlandzemente oder Tonerdeschmelzzemente und deren jeweilige Mischungen mit üblichen Zusätzen. Als hydraulisch abbindende Bindemittel wird Zement besonders bevorzugt.

Die hydraulisch abbindenden Zusammensetzungen können übliche Zusätze, wie Flugaschen, Silica fume, Schlacke, Hüttensanden und Kalksteinfiller enthalten. Weiterhin sind Zuschlagstoffe wie Sand, Kies, Steine, Quarzmehl, Kreiden sowie als Additive übliche Bestandteile wie Verflüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

In einem weiteren Aspekt betrifft die Erfindung eine hydraulisch abbindende Zusammensetzung enthaltend mindestens ein Polymer **P**, wie sie als Polymere **P** vorgehend beschrieben sind.

Das Polymer **P** kann als Dispergiermittel oder als Bestandteil eines Dispergiermittels eingesetzt werden. Ein solches Dispergiermittel umfasst mindestens ein Polymer **P**. Das Dispergiermittel kann weitere Bestandteile enthalten. Beispiele für weitere Bestandteile sind Additive, wie Verflüssiger, beispielsweise Lignosulfonate, sulfonierte Naphthalin-Formaldehyd-Kondensate, sulfonierte Melamin-Formaldehyd-Kondensate oder Polycarboxylatether (PCE), Beschleuniger, Verzögerer, Schwindreduzierer, Entschäumer, Luftporenbildner oder Schaumbildner. Typischerweise beträgt dabei der Anteil des Polymer **P** 5 bis 100 Gewichts-%, insbesondere 10 bis 100 Gew.-%, bezogen auf das Gesamtgewicht des Dispergiermittels.

Das Polymer **P** kann insbesondere verwendet werden als Verflüssiger, als Wasserreduzierer, zur Verbesserung der Verarbeitbarkeit und/oder zur Verbesserung der Fliessfähigkeit der damit hergestellten hydraulisch abbindenden Zusammensetzungen.

Ein weiterer Aspekt der Erfindung betrifft daher die Verwendung mindestens eines Polymer **P**, wie sie vorgehend beschrieben sind, zur Verbesserung der Verarbeitbarkeit von hydraulisch abbindenden Zusammensetzungen.

Bei der erfindungsgemäßen Verwendung zeigen die hydraulisch abbindenden Zusammensetzungen eine verlängerte Verarbeitbarkeit. Das bedeutet, dass die Zusammensetzung nach Zugabe von Wasser und Dispergiermittel, enthaltend das Polymer **P**, noch über vergleichsweise längere Zeit verarbeitbar bleibt, im Vergleich zu Zusammensetzungen, die das Polymer **P** nicht enthalten, oder im Vergleich zu Zusammensetzungen, die andere wasserreduzierende Zusatzmittel wie zum Beispiel herkömmliche Verflüssiger enthalten. Der Vergleich erfolgt beispielsweise so, dass die Zusammensetzungen ohne Polymer **P** oder mit herkömmlichem Verflüssiger anfänglich den gleichen Wasser/Zement Wert (w/z-Wert) bei vergleichbarem Anfangsausbreitmaß, welches über die Dosierungsmenge des Vergleichsverflüssigers eingestellt wird, aufweist. Das Ausbreitmaß von hydraulisch abbindenden Zusammensetzungen, die das Polymer **P** enthalten, nimmt vorzugsweise nach einer bestimmten Zeit, beispielsweise nach 30 min oder nach 60 min, im Wesentlichen nicht oder nur wenig ab, so dass die Veränderung zwischen dem Anfangsausbreitmaß und dem Ausbreitmaß nach 30 Minuten, vorzugsweise sogar nach 60 Minuten, möglichst klein ist.

Bei der erfindungsgemäßen Verwendung wird insbesondere die Langzeitverarbeitbarkeit verbessert. Die Langzeitverarbeitbarkeit ist über das Ausbreitmaß nach EN 1015-3 bestimmbar. Bevorzugt wird die Verarbeitbarkeit nach mehr als 30 min und/oder nach mehr als 60 min verbessert, jeweils nach Zugabe des Wassers. Bevorzugt wird auch die Verarbeitbarkeit am Zeitpunkt nach 30 min und/oder nach 60 min verbessert, jeweils nach Zugabe des Wassers.

In einer bevorzugten Ausführungsform der Erfindung nimmt das Ausbreitmaß der hydraulisch abbindenden Zusammensetzung, insbesondere einer zementhaltigen hydraulisch abbindenden Zusammensetzung, gemessen nach EN 1015-3, nach 30 Minuten (nach Zugabe des Wassers) um weniger als 10%, vorzugsweise um weniger als 5%, insbesondere bevorzugt nicht ab.

In einer weiteren bevorzugten Ausführungsform der Erfindung nimmt das Ausbreitmaß der hydraulisch abbindenden Zusammensetzung, insbesondere einer zementhaltigen hydraulisch abbindenden Zusammensetzung, gemessen nach EN 1015-3, nach 60 Minuten (nach Zugabe des Wassers) um weniger als 20%, vorzugsweise um weniger als 10%, insbesondere bevorzugt um weniger als 6 % ab.

Gegenstand der Erfindung ist auch ein Verfahren zur Herstellung einer hydraulisch abbindenden Zusammensetzung mit verlängerter Verarbeitbarkeit, wobei ein hydraulisch abbindendes Bindemittel, Wasser und ein Polymer **P** vermischt werden. Bei dem Polymer **P** handelt es sich um Polymer **P**, wie sie vorgehend beschrieben sind.

Das Polymer **P** wird vorzugsweise in einer Menge von 0.01 bis 5 Gew.-%, insbesondere 0,05 bis 2 Gew.% oder 0,1 bis 1 Gew.%, bezogen auf das Gewicht des hydraulisch abbindenden Bindemittels, eingesetzt. Das Polymer **P** kann getrennt oder als Dispergiermittel vorgemischt in fester oder flüssiger Form zugegeben werden. Das Dispergiermittel wird bevorzugt in flüssiger Form eingesetzt, insbesondere als wässrige Lösung.

Das Polymer **P** oder das Dispergiermittel kann auch in festem Aggregatszustand eingesetzt werden, beispielsweise als Pulver, Schuppen, Pellets, Granulate oder Platten. Solche festen Zusätze lassen sich gut transportieren und lagern. Das Polymer **P** kann im festen Aggregatszustand ein Bestandteil einer sogenannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Polymer **P** kann einer hydraulisch abbindenden Zusammensetzung mit oder kurz vor oder kurz nach der Zugabe des Wassers zugefügt werden. Als besonders geeignet hat sich hierbei die Zugabe des Polymer **P** in Form einer wässrigen Lösung oder Dispersion, insbesondere als Anmachwasser oder als Teil des Anmachwassers, herausgestellt. Die Herstellung der wässrigen Lösung oder Dispersion erfolgt beispielsweise durch Zusetzen von Wasser bei der Herstellung des Polymer **P** oder durch nachträgliches Vermengen mit Wasser. Je nach Art des Polymer P entsteht eine Dispersion oder eine Lösung, wobei eine gleichmäßige Lösung bevorzugt ist.

### Beispiele

### 1. Herstellung Polymere

### Erfindungsgemässe Beispiele P-1 - P-4

So wurde beispielsweise das erfindungsgemässe Polymer *P-1* hergestellt indem in einem Reaktionsgefäss mit Rührer 250 g Wasser, 69.6 g Maleinsäure (0.6 Mol), 330 g eines Allyl-Polyethylenglycols (Polyglycol A 1100, Clariant) mit einem mittleren Molekulargewicht von 1100 g/mol (0.3 Mol), 26 g Vinylacetat (0.3 Mol), 1.5 g einer 10%-igen wässrigen Lösung von Fe (II)-SO₄ 7H₂O und 2 g Natriumhypophosphit vorgelegt wurden.

Danach wurde bei einer Temperatur von 20°C bis 35°C über eine Zeit von 70 min unter Rühren 10 g einer 35%-igen wässrigen Wasserstoffperoxyd- und 4 g einer 5 %-igen wässrigen Rongalitlösung zugetropft.

120 min nach Beginn des Zutropfens wurde eine klare viskose Polymerlösung erhalten, die anschliessend mit 50%-iger Natronlauge teilneutralisiert wurde. Die Polymere *P-2* bis *P-4* wurden in gleicher Weise wie Polymer ***P-1*** entsprechend der in Tabelle 1 angegebenen Informationen hergestellt.

### Vergleichsbeispiel V-1

In einem Reaktionsgefäss mit Rührer wurden 320 g Wasser, 76.6 g Maleinsäure (0.66 Mol) und 330 g eines Allyl-Polyethylenglycols (Polyglycol A 1100, Clariant) mit einem mittleren Molekulargewicht von 1100 g/mol (0.3 Mol) vorgelegt.

Danach wurde bei einer Temperatur von 75°C bis 80°C über 4 Stunden unter Rühren 19 g Ammonium-persulfat gelöst in 100g Wasser zugetropft.

240 min nach Beginn des Zutropfens wurde eine klare viskose Polymerlösung erhalten, die anschliessend mit 50%-igen Natronlauge teilneutralisiert wurde.

**Tabelle 1 Erfindungsgemässe Polymere P-1 bis P-4 bzw. Vergleichspolymer V-1 enthalten die Struktureinheiten A der Formel (I) und die Struktureinheiten B der Formel (II), respektive die Polymere P-1 bis P-4 zusätzlich noch die Struktureinheit C der Formel (III), mit R¹= COOM, R²= COOM, R³= H, R⁴= -(CH₂-CH₂O)_{ca.25}-CH₃, M= H⁺, Na⁺; Mol-% bedeutet Mol-% der einzelnen Struktureinheiten m, n, o bezogen auf die Gesamtmolmenge der Struktureinheiten von A, B und C im Endpolymer.**

| Polymer | Mol-% | Mw (g/mol) | Vorlage (g) | Zulauf (g) | Zulaufzeit (min) |
|---|---|---|---|---|---|
| ***P-1*** | m = 25 | ca. 30'000 | Wasser 250, Fe(II) 1.5, Regler 2 | H₂O₂ 10, Rongalit 4 / | 70 |
| | n = 50 | | | | |
| | o = 25 | | | | |
| ***P-2*** | m = 30 | ca. 30'000 | Wasser 250, Fe(II) 1, Regler 2 | H₂O₂ 10, Rongalit 4 | 95 |
| | n = 50 | | | | |
| | o = 20 | | | | |
| ***P***-***3*** | m = 36 | ca. 35'000 | Wasser 650, Fe(II) 4, Regler 4 | H₂O₂ 4 Rongalit 13 | 210 |
| | n = 50 | | | | |
| | o = 14 | | | | |
| ***P***-***4*** | m = 38 | ca. 25'000 | Wasser 250, Fe(II) 1, Regler 2 | H₂O₂ 12, Rongalit 4.5 | 150 |
| | n = 50 | | | | |
| | o = 12 | | | | |
| ***V***-***1*** | m = 33 | ca. 25'000 | Wasser 320 | Ammonium-persulfat in Wasser, 119 | 240 |
| | n = 67 | | | | |
| | o = - | | | | |

Fe(II) steht für eine 10%-ige wässrige Lösung von Fe (II)-SO₄ 7H₂O, (Molekulargewichts-)Regler steht für Natriumhypophosphit, H₂O₂ steht für eine 35%-ige wässrige Wasserstoffperoxydlösung und Rongalit steht für eine 5 %-ige wässrige Rongalitlösung.

### 2. Zementversuche

Die Wirksamkeit der erfindungsgemässen Polymeren wurde im Zement getestet. Zu 100 g Zement (Schweizer CEM I 42.5) wurden innerhalb von 30 Sekunden 29.5 g Anmachwasser, in dem 0.5 g einer 30-%igen wässrigen Lösung eines erfindungsgemässen Polymers *P-1, **P-2,** P-3* oder *P-4* oder dem Vergleichspolymer ***V-1*** gelöst war, zugegeben und in einem Fallmischer 2 Minuten gemischt. Die Gesamt-Mischzeit nass war 2 Minuten. Der Wasser/Zement-Wert (w/z-Wert) betrug 0.3.

Das Ausbreitmass der so hergestellten Zementzusammensetzungen ***ZZ-P-1, ZZ-P-2, ZZ-P-3, ZZ-P-4*** und ***ZZ-V-1*** wurden gemäss EN 1015-3 bestimmt.

**Tabelle 2: Ausbreitmass (ABM) in cm nach 30 Sekunden (sec)**

| **Nr** | **Zusatzmittel** | **ABM (cm) nach 30 sec** |
|---|---|---|
| ***ZZ-P-1*** | ***P-1*** | 76 |
| ***ZZ-P-2*** | ***P-2*** | 90 |
| ***ZZ-P-3*** | ***P***-***3*** | 80 |
| ***ZZ-P-4*** | ***P-4*** | 74 |
| ***ZZ-V-1*** | ***V-1*** | 63 |

Die Resultate in der Tabelle 2 zeigen, dass Zementzusammensetzungen mit den erfindungsgemässen Polymeren ***P-1** -* ***P-4*** hervorragende verflüssigende Eigenschaften aufweisen im Vergleich zu der Zementzusammensetzung mit dem herkömmlichen Polymer ***V-1**,* was sich in den Werte des Ausbreitmasses nach 30 Sekunden widerspiegelt. Besonders gute Resultate wurden mit den Polymeren ***P-2*** und ***P***-***3*** erzielt. Das heisst, besonders gute Resultate für die Verflüssigung sofort nach Zugabe werden in Zementzusammensetzungen erzielt, wenn das Polymer ein Verhältnis *m*/*o* von 1.5 - 3 aufweist.

### 3. Mörteltests

Die Wirksamkeit der erfindungsgemässen Polymeren wurde im Mörtel getestet.

| Zusammensetzung der Mörtelmischung (**MM**): (Grösstkorn 8mm) | Menge |
|---|---|
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |

Die Sande, der Filler und der Zement wurden 1 Minute in einem Hobart-Mischer trocken gemischt. Innerhalb von 30 Sekunden wurde das Anmachwasser, in dem 2.25 g des erfindungsgemässen Polymer ***P-3,** P-4* oder einem Vergleichspolymer ***V-1*** gelöst war, zugegeben und noch weitere 2.5 Minuten gemischt. Die Gesamt-Mischzeit nass war 3 Minuten. Der Wasser/Zement-Wert (w/z-Wert) betrug 0.41.

Das Ausbreitmass des Mörtels wurde gemäss EN 1015-3 bestimmt.

**Tabelle 3: Ausbreitmass (ABM) in cm nach 0, 30 und 60 Minuten (min)**

| **Nr** | **Zusatzmittel** | **ABM (cm)** | | |
|---|---|---|---|---|
| | | **0 min** | **30 min** | **60 min** |
| ***MZ-P-3*** | ***P***-***3*** | 215 | 216 | 202 |
| ***MZ-P-4*** | ***P-4*** | 199 | 222 | 190 |
| ***MZ-V-1*** | ***V*-*1*** | 172 | 165 | 153 |

Die Resultate in Tabelle 3 zeigen, dass die erfindungsgemässen Polymere hervorragende verflüssigende Eigenschaften aufweisen verglichen mit dem herkömmlichen Polymer ***V-1.*** Dies zeigen vor allem die Werte des Ausbreitmasses sofort nach Zugabe des Polymers, wo die erfindungsgemässen Polymere eine wesentlich bessere Verflüssigungswirkung erwirken als das Vergleichspolymer, sowie nach 30 bis 60 Minuten, wo sich das Ausbreitmass mit den Polymeren ***P***-***3*** und ***P-4*** über 60 Minuten relativ konstant hält und höchstens 6% gegenüber dem Anfangsausbreitmass nach 0 Minuten abnimmt.

## Patentansprüche

1. Polymer P umfassend:
a. *m* Mol-% mindestens einer Struktureinheit A der Formel (I); 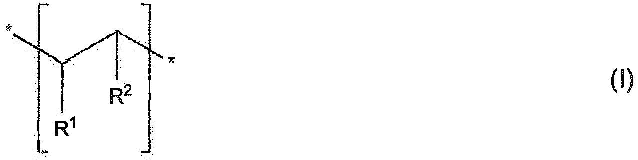
b. *n* Mol-% mindestens einer Struktureinheit B der Formel (II); 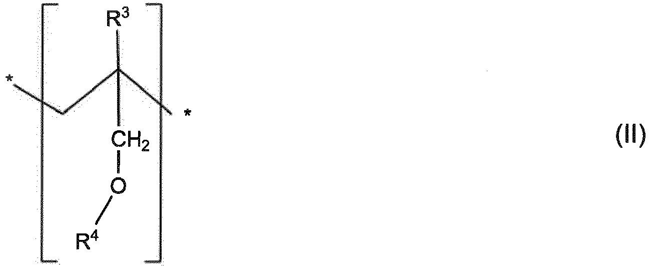
c. *o* Mol-% mindestens einer Struktureinheit C der Formel (III); 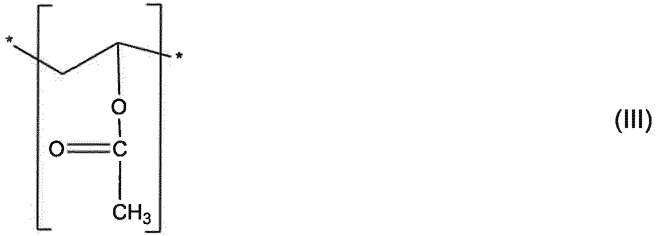 und gegebenenfalls
d. *p* Mol-% mindestens einer weiteren Struktureinheit D;
wobei R¹ und R² hierbei unabhängig voneinander je für COO⁻M oder COOR⁴ steht,
R³ für H oder CH₃ steht,
R⁴ für 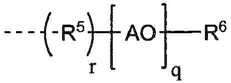 steht, R⁵ für eine Alkylengruppe mit 1 bis 6 C-Atomen steht,
R⁶ für H, eine Alkylgruppe, vorzugsweise mit 1 bis 20 C-Atomen, eine Alkylarylgruppe, vorzugsweise mit 7 bis 20 C-Atomen, steht;
wobei der Substituent A unabhängig voneinander für eine C2- bis C4-Alkylengruppe steht, der Index q einen Wert von 2 bis 300 darstellt und der Index r einen Wert von 0 bis 1 darstellt;
wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
wobei *m*, *n, o, p* unabhängig voneinander Zahlen bedeuten, wobei die Summe *m*+*n*+*o*+*p =* 100, und *m*>0*, n*>0*, o*>0 und *p*≥0 bedeuten; und
wobei
*m* = 20 - 85
*n* = 10 *-* 50
*o* = 5 - 50
*p* = 0 - 20 beträgt,
wobei das Polymer **P** ein Verhältnis *m*/*o* von 2.5 - 4 aufweist.

2. Polymer **P** gemäss Anspruch 1, **dadurch gekennzeichnet, dass** das Polymer **P** ein mittleres Molekulargewicht Mₙ von 15'000-50'000 g/mol aufweist.

3. Polymer **P** gemäss Anspruch 1 oder 2, **dadurch gekennzeichnet, dass** das Polymer **P** ein Verhältnis *m*/*(n*+*o*+*p)* von 0.5 - 2.5 aufweist.

4. Verfahren zur Herstellung eines Polymers **P** gemäss einem der Ansprüche 1 - 3.

5. Verfahren gemäss Anspruch 3, umfassend den Schritt der radikalischen Polymerisation von:
i) *m'* Mol-% mindestens einer Verbindung **A'**, welche ein Maleinsäureanhydrid ist oder eine Verbindung der Formel (IV); 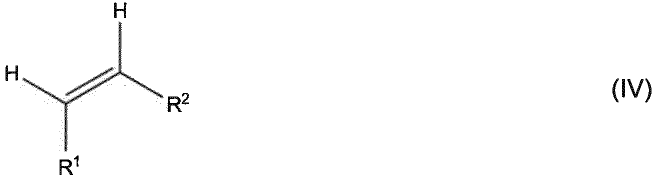
ii) *n'* Mol-% mindestens einer Verbindung **B'** der Formel (V); 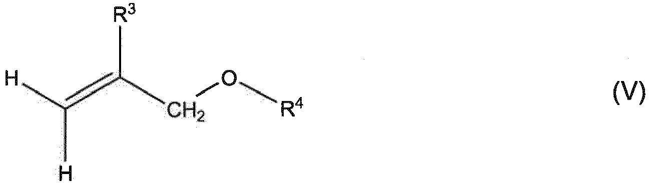
iii) *o'* Mol-% mindestens einer Verbindung **C'** der Formel (VI); 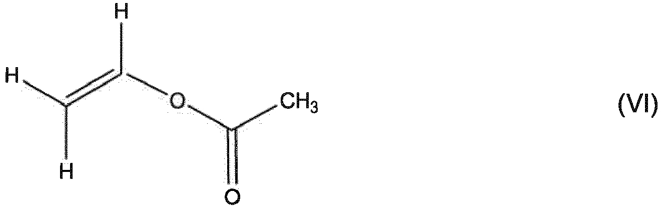 und gegebenenfalls
iv) *p'* Mol-% mindestens einer weiteren Verbindung **D'**;
wobei R¹ und R² hierbei unabhängig voneinander je für COO⁻M oder COOR⁴ steht
wobei R³ für H oder CH₃
wobei R⁴ für 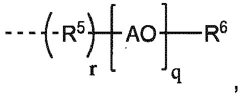 R⁵ für eine Alkylengruppe mit 1 bis 6 C-Atomen,
R⁶ für H, eine Alkylgruppe, vorzugsweise mit 1 bis 20 C-Atomen, eine Alkylarylgruppe, vorzugsweise mit 7 bis 20 C-Atomen, steht;
wobei der Substituent A unabhängig voneinander für eine C2- bis C4-Alkylengruppe steht, der Index q einen Wert von 2 bis 300 darstellt und der Index r einen Wert von 0 bis 1 darstellt;
wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
wobei *m'*+*n'*+*o'*+*p'* unabhängig voneinander Zahlen bedeuten, wobei die Summe *m'*+*n'*+*o'*+*p'* = 100, und *m'* >0, *n'*>0, *o'*>0 und *p'*≥0 bedeuten; und
wobei
*m*' = 20 - 85
*n'* = 10 *-* 50
*o'* = 5 - 50
*p'* = 0 - 20 beträgt,
wobei ein Verhältnis von *m'*/*o'* von 2.5 - 4 vorliegt;
in Gegenwart von einem Initiator für radikalische Polymerisationen bei einer Reaktionstemperatur von 10°C bis 50°C, bevorzugt von 15°C bis 35°C.

6. Verfahren gemäss Anspruch 5, **dadurch gekennzeichnet, dass** es sich bei dem Initiator für radikalische Polymerisationen um einen Redoxsystem-basierten Initiator handelt.

7. Verfahren gemäss Anspruch 6, **dadurch gekennzeichnet, dass** der Redoxsystem-basierten Initiator ein reduzierendes Mittel und einem Radikalbildner umfasst, wobei das reduzierende Mittel ausgewählt ist aus der Gruppe bestehend aus Natriumhydroxymethansulfinat (Rongalit), Alkalimetallsulfite, Metabisulfite, Ascorbinsäure und Keto-enole und der Radikalbildner eine Peroxidverbindung ist.

8. Verfahren gemäss einem der Ansprüche 5 - 7, **dadurch gekennzeichnet, dass** das Verhältnis *m'*/*(n'*+*o'*+*p')* zwischen 0.5 und 2.5 beträgt.

9. Verfahren gemäss einem der Ansprüche 5 - 8, **dadurch gekennzeichnet, dass** die radikalische Polymerisation bei einem pH von 2 - 4 durchgeführt wird.

10. Verwendung mindestens eines Polymers **P** gemäss einem der Ansprüche 1 - 3 zur Verbesserung der Verarbeitbarkeit von hydraulisch abbindenden Zusammensetzungen.

11. Verwendung gemäss Anspruch 10, **dadurch gekennzeichnet, dass** das Ausbreitmaß der hydraulisch abbindenden Zusammensetzung gemessen nach EN 1015-3, nach 30 Minuten um weniger als 10% abnimmt.

12. Hydraulisch abbindende Zusammensetzung enthaltend mindestens ein Polymer **P** gemäss einem der Ansprüche 1 - 3.

13. Verfahren zur Herstellung einer hydraulisch abbindenden Zusammensetzung mit verlängerter Verarbeitbarkeit, wobei ein hydraulisch abbindendes Bindemittel, Wasser und ein Polymer P gemäss einem der Ansprüche 1 - 3 vermischt werden.

## Claims

1. Polymer **P** comprising:
a. *m* mol % of at least one structural unit **A** of the formula (I); 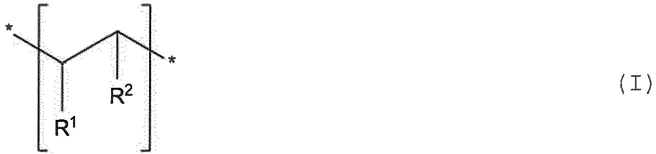
b. *n* mol % of at least one structural unit **B** of the formula (II); 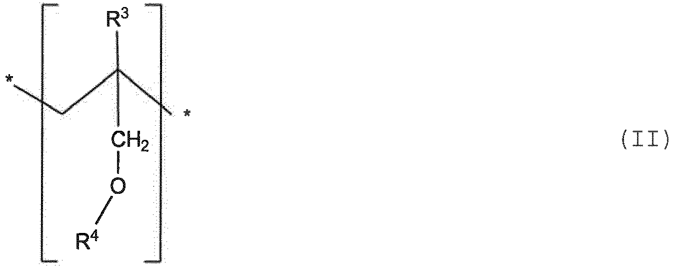
c. *o* mol % of at least one structural unit C of the formula (III); 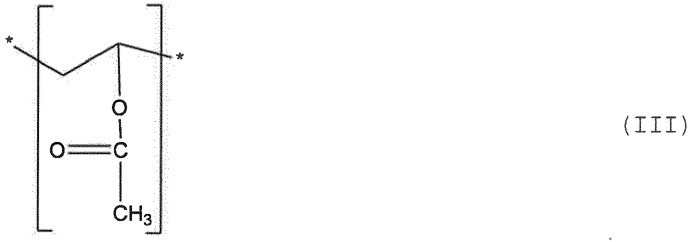 and optionally
d. *p* mol % of at least one further structural unit **D***;*
where R¹ and R² in this respect independently of one another each stand for COO⁻M or COOR⁴,
R³ stands for H or CH₃,
R⁴ stands for 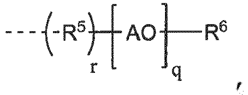 R⁵ stands for an alkylene group having 1 to 6 C atoms,
R⁶ stands for H, an alkyl group, preferably having 1 to 20 C atoms, an alkylaryl group, preferably having 7 to 20 C atoms;
wherein substituent A independently of one another stands for a C2 to C4 alkylene group, the subscript q represents a value of 2 to 300, and the subscript r represents a value of 0 to 1;
wherein M = cation, preferably H⁺, an alkali metal ion, alkaline earth metal ion, a bivalent or trivalent metal ion, NH₄⁺, or an organic ammonium, particularly preferably H⁺, Na⁺, Ca⁺⁺/2, Mg⁺⁺/2, NH₄⁺, or an organic ammonium;
wherein *m, n, o, p* independently of one another are numbers, where the sum *m+n+o+p =* 100, and *m*>0, *n*>0, *o*>0 and *p*≥0; and
wherein
*m* = 20-85
*n* = 10-50
*o* = 5-50
*p* = 0-20,
wherein the polymer **P** has a ratio *m*/*o* of 2.5-4.

2. Polymer **P** according to Claim 1, **characterized in that** the polymer **P** has an average molecular weight Mₙ of 15,000-50,000 g/mol.

3. Polymer **P** according to Claim 1 or 2, **characterized in that** the polymer **P** has a ratio *m*/*(n+o+p)* of 0.5-2.5.

4. Method for preparing a polymer **P** according to any one of Claims 1-3.

5. Method according to Claim 3, comprising the step of the free-radical polymerization of:
i) *m'* mol % of at least one compound **A',** which is a maleic anhydride or a compound of the formula (IV); 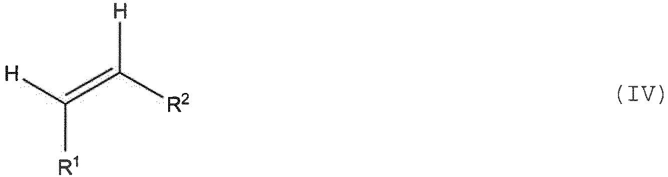
ii) *n'* mol % of at least one compound **B'** of the formula (V); 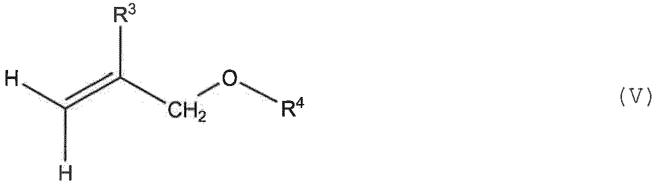
iii) *o'* mol % of at least one compound **C'** of the formula (VI); 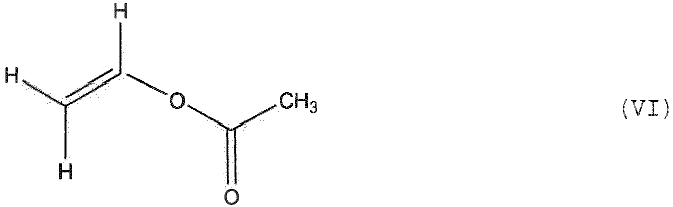 and optionally
iv) *p'* mol % of at least one further compound **D'**;
where R¹ and R² in this respect independently of one another each stand for COO⁻M or COOR⁴ where R³ stands for H or CH₃
where R⁴ stands for 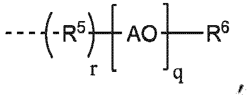 R⁵ stands for an alkylene group having 1 to 6 C atoms,
R⁶ stands for H, an alkyl group, preferably having 1 to 20 C atoms, an alkylaryl group, preferably having 7 to 20 C atoms;
wherein substituent A independently of one another stands for a C2 to C4 alkylene group, the subscript q represents a value of 2 to 300, and the subscript r represents a value of 0 to 1;
wherein M = cation, preferably H⁺, an alkali metal ion, alkaline earth metal ion, a bivalent or trivalent metal ion, NH₄⁺, or an organic ammonium, particularly preferably H⁺, Na⁺, Ca⁺⁺/2, Mg⁺⁺/2, NH₄⁺, or an organic ammonium;
wherein *m'+n'+o'+p'* independently of one another are numbers, where the sum *m'+n'+o'+p'* = 100, and *m'*>0, *n'*>0, *o'*>0 and *p'*≥0; and
wherein
*m'* = 20-85
*n'* = 10-50
*o'* = 5-50
*p'* = 0-20,
wherein a ratio of *m'*/*o'* of 2.5-4 is present;
in the presence of an initiator for free-radical polymerizations at a reaction temperature of 10°C to 50°C, preferably of 15°C to 35°C.

6. Method according to Claim 5, **characterized in that** the initiator for free-radical polymerizations is a redox system-based initiator.

7. Method according to Claim 6, **characterized in that** the redox system-based initiator comprises a reducing agent and a radical former, where the reducing agent is selected from the group consisting of sodium hydroxymethanesulphinate (rongalite), alkali metal sulphites, metabisulphites, ascorbic acid, and ketoenols, and the radical former is a peroxide compound.

8. Method according to any one of Claims 5-7, **characterized in that** the ratio *m'*/*(n'+o'+p')* is between 0.5 and 2.5.

9. Method according to any one of Claims 5-8, **characterized in that** the free-radical polymerization is carried out at a pH of 2-4.

10. Use of at least one polymer **P** according to any one of Claims 1-3 to improve the workability of hydraulically setting compositions.

11. Use according to Claim 10, **characterized in that** the flow table spread of the hydraulically setting composition, measured according to EN 1015-3, declines by less than 10% after 30 minutes.

12. Hydraulically setting composition containing at least one polymer **P** according to any one of Claims 1-3.

13. Method for preparing a hydraulically setting composition with extended workability, wherein a hydraulically setting binder, water, and a polymer **P** according to any one of Claims 1-3 are combined.

## Revendications

1. Polymère P, comprenant :
a. *m %* en moles d'au moins une unité structurale A de formule (I) ; 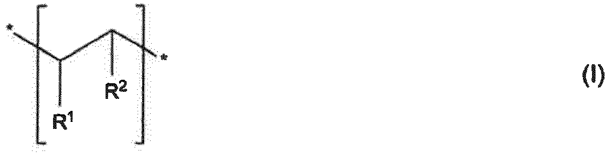
b*. n* % en moles d'au moins une unité structurale B de formule (II) ; 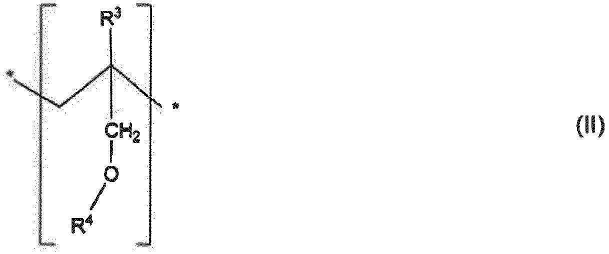
c. *o* % en moles d'au moins une unité structurale C de formule (III) ; 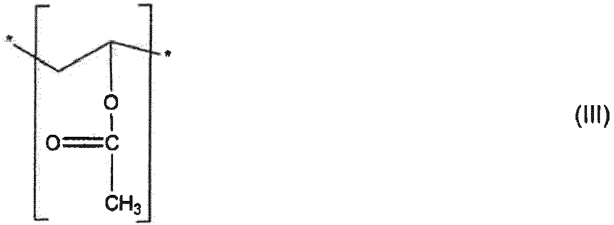 et éventuellement
d. *p* % en moles d'au moins une unité structurale D supplémentaire ;
R¹ et R² représentant chacun indépendamment l'un de l'autre COO⁻M ou COOR⁴,
R³ représentant H ou CH₃,
R⁴ représentant 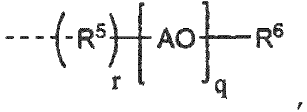 R⁵ représentant un groupe alkylène de 1 à 6 atomes C,
R⁶ représentant H, un groupe alkyle, de préférence de 1 à 20 atomes C, un groupe alkylaryle, de préférence de 7 à 20 atomes C ;
les substituants A représentant indépendamment les uns des autres un groupe alkylène en C2 à C4, l'indice q représentant une valeur de 2 à 300, et l'indice r représentant une valeur de 0 à 1 ;
avec M = cation, de préférence H⁺, ion de métal alcalin, ion de métal alcalino-terreux, ion métallique bi- ou trivalent, NH₄⁺ ou un ammonium organique, de manière particulièrement préférée H⁺, Na⁺, Ca⁺⁺/2, Mg⁺⁺/2, NH₄⁺ ou un ammonium organique ;
*m, n, o*, *p* signifiant indépendamment les uns des autres des nombres, avec la somme *m+n+o+p =* 100, et *m* > 0, *n* > 0, *o* > 0 et *p* ≥ 0 ; et avec
*m* = 20 à 85,
*n* = 10 à 50,
*o* = 5 à 50,
*p* = 0 à 20,
le polymère P présentant un rapport *m*/*o* de 2,5 à 4.

2. Polymère P selon la revendication 1, **caractérisé en ce que** le polymère P présente un poids moléculaire moyen Mₙ de 15 000 à 50 000 g/mol.

3. Polymère P selon la revendication 1 ou 2, **caractérisé en ce que** le polymère P présente un rapport *m* /*(n+o+p)* de 0,5 à 2,5.

4. Procédé de fabrication d'un polymère P selon l'une quelconque des revendications 1 à 3.

5. Procédé selon la revendication 3, comprenant l'étape de polymérisation radicalaire de :
i) *m'* % en moles d'au moins un composé A', qui est un anhydride de l'acide maléique ou un composé de formule (IV) ; 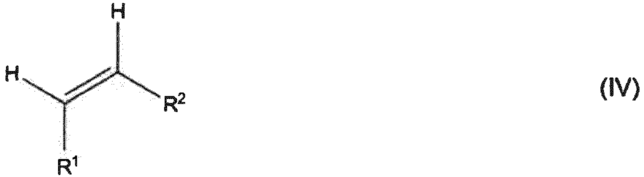
ii) *n'* % en moles d'au moins un composé B' de formule (V) ; 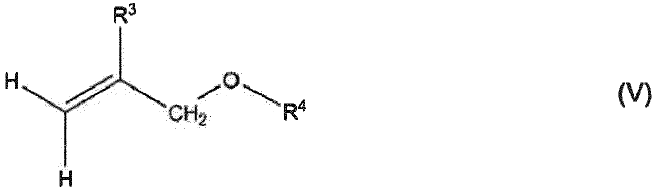
iii) *o'* % en moles d'au moins un composé C' de formule (VI) ; 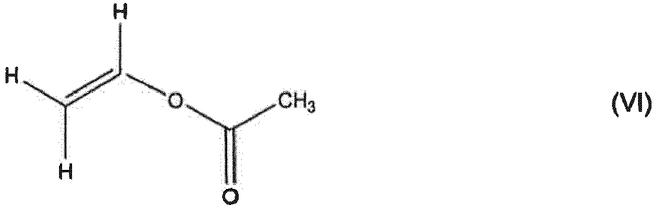 et éventuellement
iv) *p'* % en moles d'au moins un composé D' supplémentaire ;
R¹ et R² représentant chacun indépendamment l'un de l'autre COO⁻M ou COOR⁴,
R³ représentant H ou CH₃,
R⁴ représentant 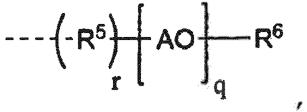 R⁵ représentant un groupe alkylène de 1 à 6 atomes C,
R⁶ représentant H, un groupe alkyle, de préférence de 1 à 20 atomes C, un groupe alkylaryle, de préférence de 7 à 20 atomes C ;
les substituants A représentant indépendamment les uns des autres un groupe alkylène en C2 à C4, l'indice q représentant une valeur de 2 à 300, et l'indice r représentant une valeur de 0 à 1 ;
avec M = cation, de préférence H⁺, ion de métal alcalin, ion de métal alcalino-terreux, ion métallique bi- ou trivalent, NH₄⁺ ou un ammonium organique, de manière particulièrement préférée H⁺, Na⁺, Ca⁺⁺/2, Mg⁺⁺/2, NH₄⁺ ou un ammonium organique ;
*m'*+*n'*+*o'*+*p'* signifiant indépendamment les uns des autres des nombres, avec la somme *m'*+*n'*+*o'*+*p'* = 100, et *m'* > 0, *n'* > 0, *o'* > 0 et p' ≥ 0 ; et avec
*m'* = 20 à 85,
*n'* = 10 à 50,
*o*' = 5 à 50,
*p'* = 0 à 20,
un rapport *m'*/*o'* de 2,5 à 4 étant présent ;
en présence d'un initiateur pour les polymérisations radicalaires à une température de réaction de 10 °C à 50 °C, de préférence de 15 °C à 35 °C.

6. Procédé selon la revendication 5, **caractérisé en ce que** l'initiateur pour les polymérisations radicalaires est un initiateur à base d'un système redox.

7. Procédé selon la revendication 6, **caractérisé en ce que** l'initiateur à base d'un système redox comprend un agent réducteur et un agent de formation de radicaux, l'agent réducteur étant choisi dans le groupe constitué par l'hydroxyméthane-sulfinate de sodium (Rongalite), les sulfites de métaux alcalins, les métabisulfites, l'acide ascorbique et les céto-énols, et l'agent de formation de radicaux étant un composé de peroxyde.

8. Procédé selon l'une quelconque des revendications 5 à 7, **caractérisé en ce que** le rapport *m'*/(*n'*+*o'*+*p'*) est compris entre 0,5 et 2,5.

9. Procédé selon l'une quelconque des revendications 5 à 8, **caractérisé en ce que** la polymérisation radicalaire est réalisée à un pH de 2 à 4.

10. Utilisation d'au moins un polymère P selon l'une quelconque des revendications 1 à 3 pour améliorer l'usinabilité de compositions à prise hydraulique.

11. Utilisation selon la revendication 10, **caractérisée en ce que** l'étalement de la composition à prise hydraulique mesuré selon EN 1015-3 diminue de moins de 10 % après 30 minutes.

12. Composition liante hydraulique contenant au moins un polymère P selon l'une quelconque des revendications 1 à 3.

13. Procédé de fabrication d'une composition à prise hydraulique ayant une usinabilité prolongée, dans lequel un liant à prise hydraulique, de l'eau et un polymère P selon l'une quelconque des revendications 1 à 3 sont mélangés.
